# EUROPEAN PATENT SPECIFICATION

(11) **EP 3 445 156 B1**
(45) Date of publication and mention of the grant of the patent: **03.03.2021**
(21) Application number: 17785189.6
(22) Date of filing: 21.04.2017
(51) Int. Cl.: A01G 31/02

(54) **HORTICULTURAL APPARATUS**
GARTENBAUVORRICHTUNG
APPAREIL HORTICOLE

(30) Priority: 22.04.2016 CA 2927970
(43) Date of publication of application: 27.02.2019
(73) Proprietor: 9934294 Canada Inc, Quebec J0L 2K0 (CA)
(72) Inventor: DUMONT, Gilles, St-Philippe de Laprairie Quebec J0L 2K0 (CA)
(74) Representative: Glück Kritzenberger Patentanwälte PartGmbB
(86) International application number: PCT/CA2017/000093
(87) International publication number: WO 2017/181267

(56) References cited:
- EP-A1- 0 440 524
- WO-A1-2016/058084
- CA-A1- 2 343 254
- CA-A1- 2 401 737
- CA-A1- 2 460 465
- CA-A1- 2 659 658
- US-B2- 7 181 886

## Description

### FIELD OF THE INVENTION

The present invention relates to a horticultural apparatus and arrangement.

### BACKGROUND OF THE INVENTION

The use of many different horticultural methods has been practiced for centuries. The growing of plants of many different varieties has been recorded throughout history. In recent times, the practice of agriculture has changed from small family farms to huge plots of land being utilized to grow specific crops. The crop grown in any given area will depend upon the resources available including the type of soil, the weather associated with the particular area and the supply of water.

With the industrialization of agriculture, the industry has grown enormously with certain vegetables or plants growing in one area and shipped substantial distances to the end user. Thus, a vegetable which may be grown year round in South America can be shipped and sold in North America and Europe due to improved transportation resources. While this has greatly increased the variety of plants, vegetables and fruits available in many different countries, there are many people who are critical of this type of agriculture. The reasons include the fact that when a single crop grows on a given plot of land, micro nutrients in the soil are depleted. Also, people are critical of the fact that the transportation of plants to market can lead to substantial pollution and with global warming, this is an increasing problem.

More recently, the use of greenhouses and the like permits growth of normally out of season produces in cooler locales. While this is widely practiced today with certain fruits and vegetables such as tomatoes and the like, there are many other plants which could be grown locally if there was an efficient way of doing so.

The field of indoor agriculture has been growing enormously as people have realized that this is a more efficient way of growing and can provide locally grown produce. While there are some plants for which this process may not be suitable (such as root vegetables), there is an increasing number of plants which can be grown in this manner.

As the field has developed, there have been proposals in the art for various types of apparati which can function efficiently. One such apparatus utilizes a rotating drum having a centrally located light source.

### SUMMARY OF THE INVENTION

It is an object of the present invention to provide an improved apparatus for the growth of plants.

It is a further object of the present invention to provide a horticultural apparatus which utilizes a rotating drum, the drum having an interior source of light, and a plurality of plant receiving devices mounted on the drum.

According to the present invention, there is provided a growing apparatus comprising a rotatable drum, a light source situated interiorly of the rotatable drum, a plurality of plant receiving devices extending transversely of the drum and being located interiorly thereof, the plant receiving devices including a tray having a plurality of plant receiving receptacles formed therein, each of the plant receiving receptacles having a frustoconical configuration with a narrow end of the frustoconical configuration facing interiorly of the drum towards the light source, wherein said plant receiving receptacles contain a plant growing medium therein.

Preferably, the apparatus is similar to the apparatus shown in International Publication WO 2016/058084. In this publication, there is shown an apparatus comprising a rotating drum and which apparatus includes means for feeding the nutrients water to each individual plant according to the specific requirements of that plant. This is accomplished by measuring one or more properties of either the soil or the plant and then calculating the amount of nutrient and/or water needed. In doing this, one provides an extremely efficient arrangement in which there is no waste of resources while maximizing the growth of each plant.

In one embodiment of the present invention, the plants are growing in a tray having a plurality of receptacles formed therein. The tray may form part of a plant receiving device which extends transversely of the rotating drum. Each tray has a plurality of plant receiving receptacles formed therein. Each of the plant receiving receptacles is formed of a frustoconical configuration with the narrow end thereof facing the interior of the drum and the light source. Naturally, it will be understood that not all of the plant receiving receptacles may be of a frustoconical configuration as other configurations for some of the trays may be suitable for different types of plants.

The other end of the frustoconically shaped plant receiving receptacles may be covered with a suitable material. Thus, the trays may be sealed with a film made of cellophane or other suitable materials.

The trays may be designed of different sizes depending upon the plant to be grown. The trays may be refillable and re-used several times.

As previously mentioned, the apparatus may be provided with a system for feeding water and/or nutrients to the individual plants. By feeding the optimal amount to each plant, disposal of material is avoided. The optimal amount may be determined by measuring one or more properties of the plant and/or the soil and using suitable algorithms, creating a "perfect" level for each plant.

The apparati are preferably stacked to minimize space. The stacked apparati may be movable in forward/reverse directions and lateral directions.

### BRIEF DESCRIPTION OF THE DRAWINGS

Having thus generally described the invention, reference will be made to the accompanying drawings illustrating embodiments thereof, in which:
Figure 1 is a schematic top plan view illustrating movement of rows of apparati according to the present invention;
Figure 2 is a schematic top plan view illustrating lateral movement of the apparati;
Figure 3 is a schematic side view of a plurality of apparati interconnected according to an embodiment of the present invention;
Figure 4 is a schematic side view illustrating lateral movement of apparati according to the present invention;
Figure 5 is a perspective view of a single apparatus used in the present invention;
Figure 6 is a perspective view of a tray having plant receiving receptacles formed therein;

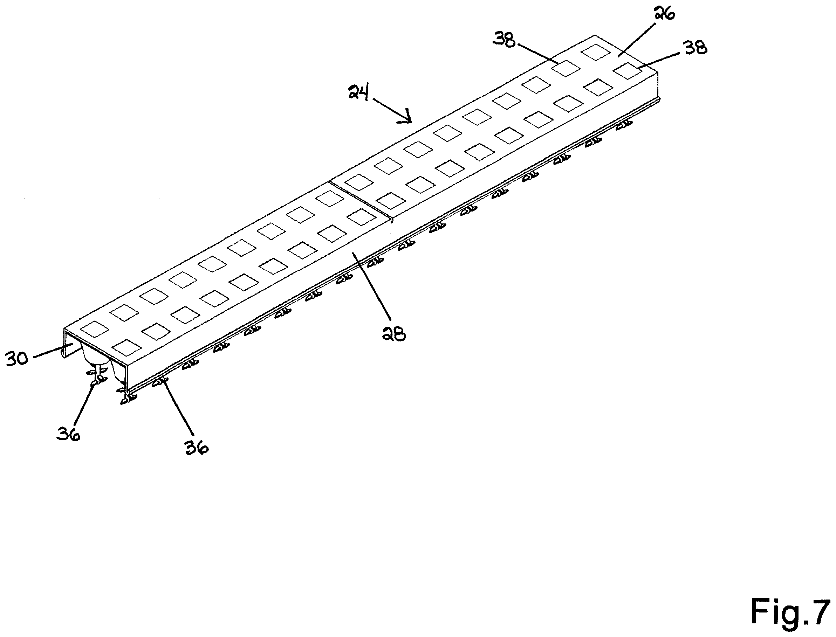

Figure 7 is a bottom view of the tray of Figure 6;

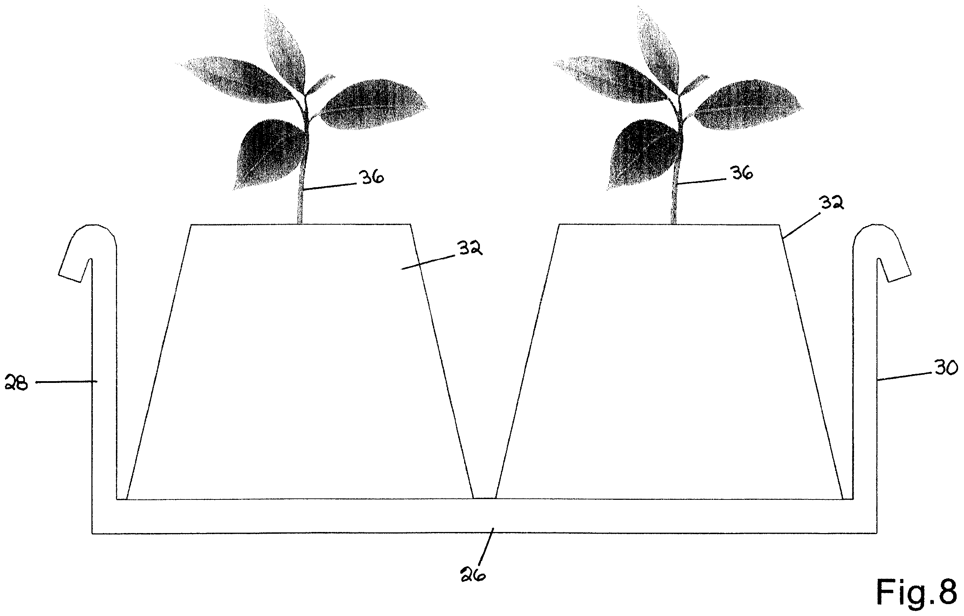

Figure 8 is an end view thereof;
Figure 9 is a perspective view illustrating placement of a portion of a tray;

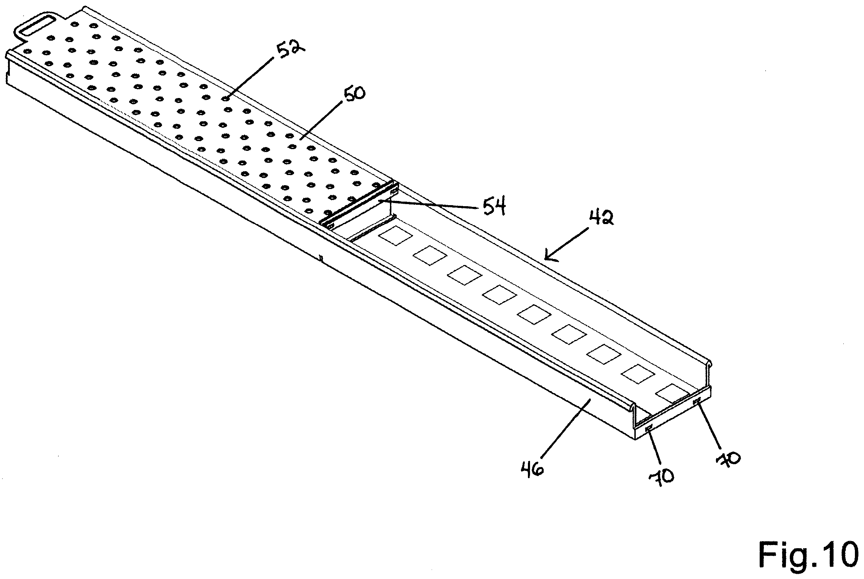

Figure 10 is a view of the tray in position;

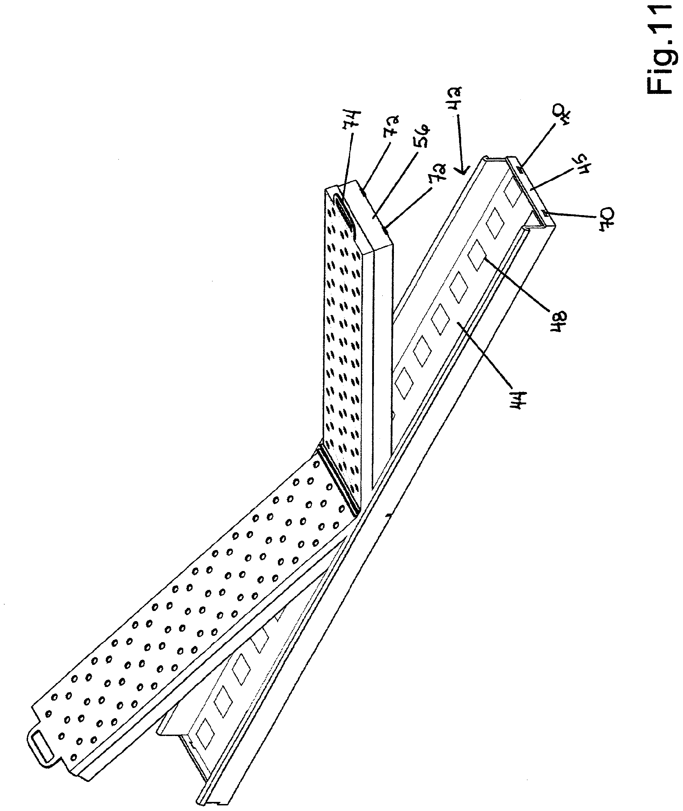

Figure 11 is a perspective view illustrating movement of a portion of the trays;

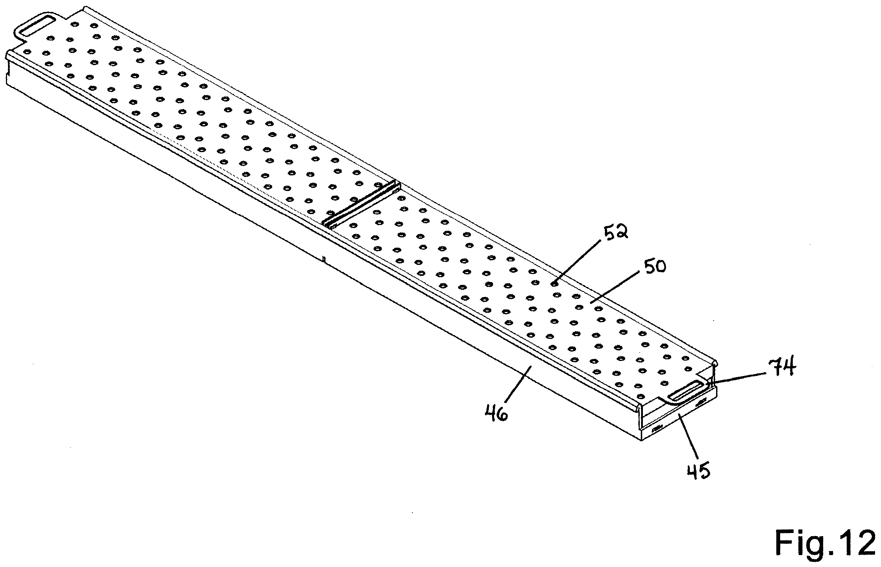

Figure 12 is a perspective view thereof;

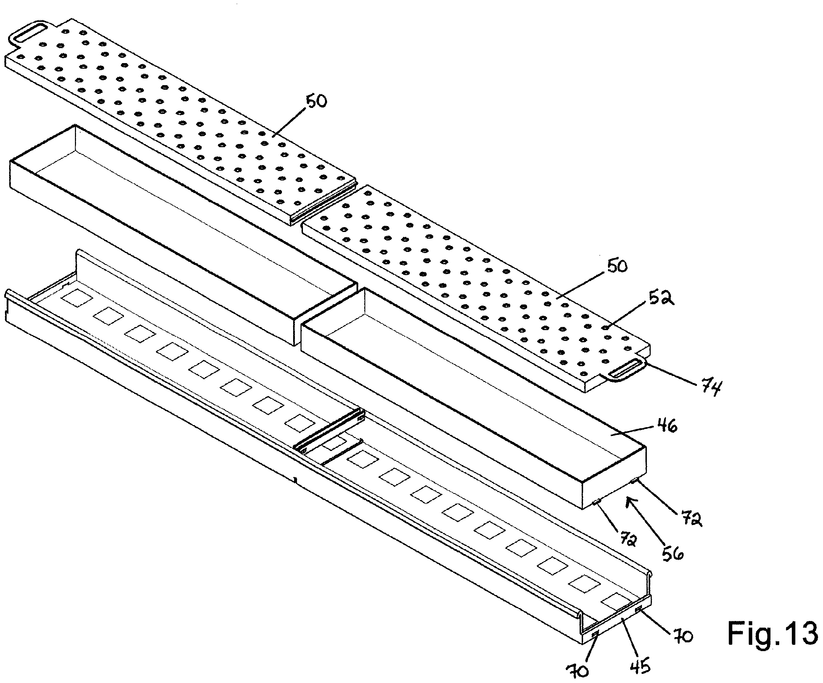

Figure 13 is an exploded view thereof;
Figure 14 is a bottom perspective view of a tray having plant receiving receptacles formed therein; and
Figure 15 is a perspective view illustrating the tray of Figure 14 having a sealing film thereon.

### DETAILED DESCRIPTION OF THE INVENTION

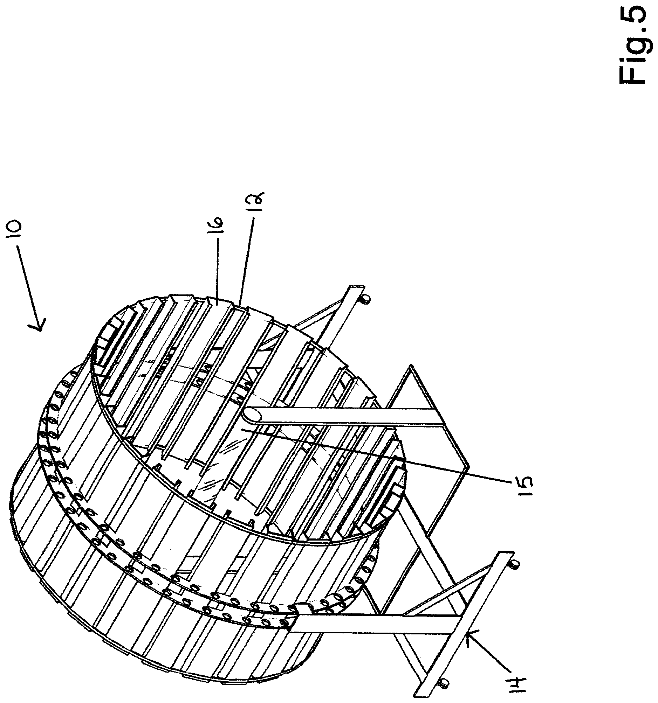

Referring to the drawings in greater detail and by reference characters thereto, there is illustrated in Figure 5 a horticultural apparatus which is generally designated by reference numeral 10.

Horticultural apparatus 10 is preferably like that shown in International Application PCT/CA2015/000538, the apparatus including a rotating drum 12 which is mounted on any suitable stand 14. Interiorly of rotating drum 12 are a plurality of transversely extending trays 16. The horticultural apparatus will also include a light source 15 as well as a means for supplying moisture and nutrients to plants within transversely extending trays 16.

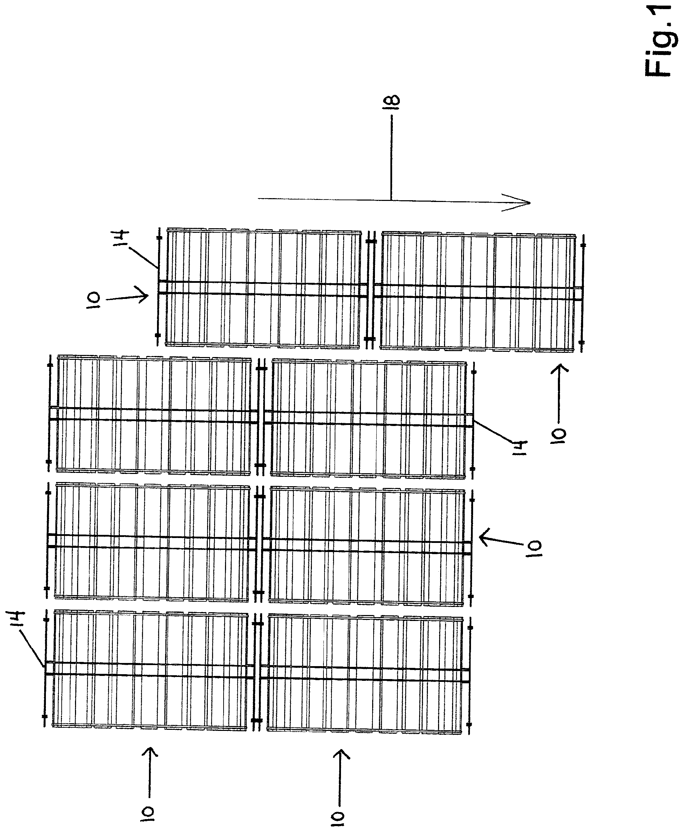

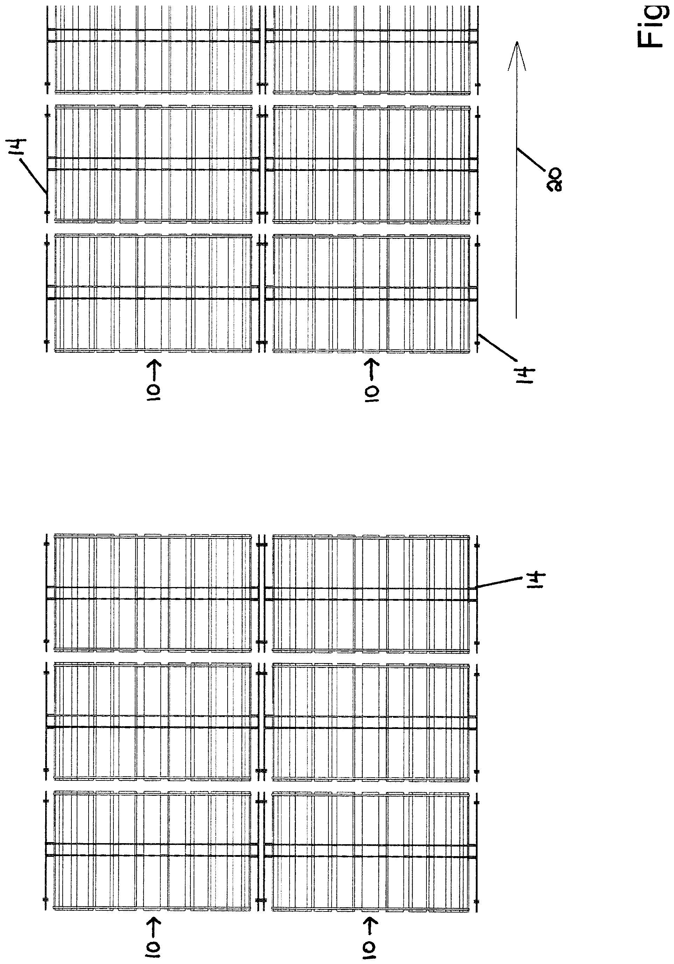

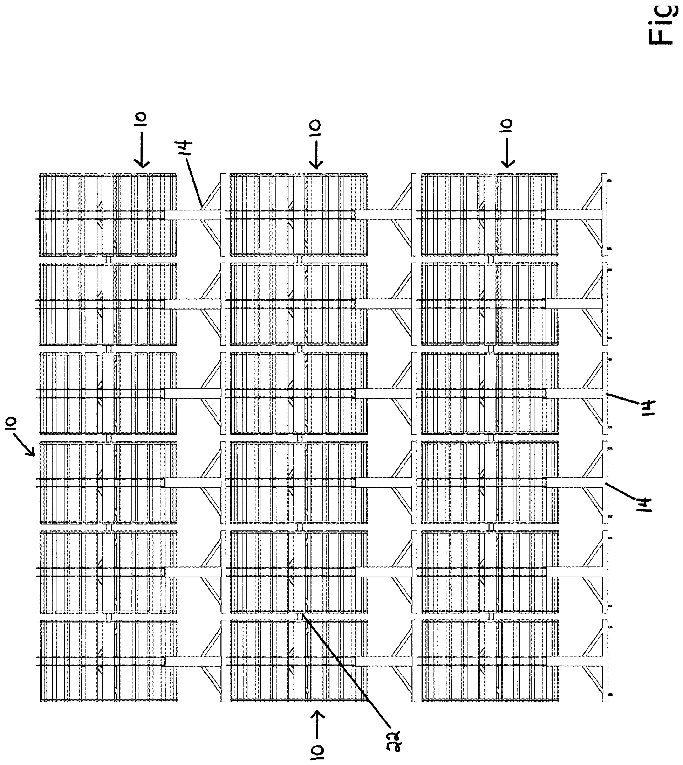

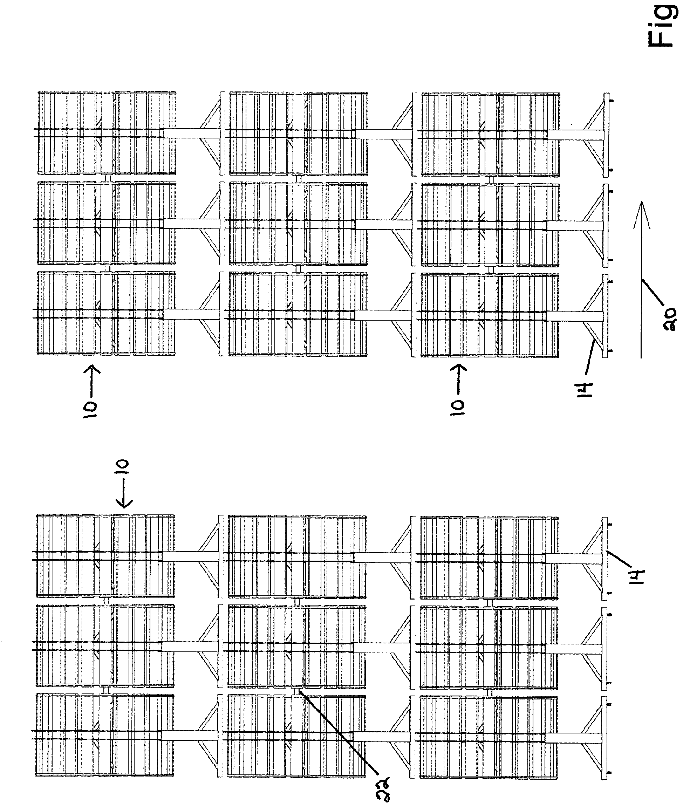

The present invention can utilize such a horticultural apparatus which is conventionally used interiorly of a building, but stacked to have a plurality of such apparatus mounted on top of each other as illustrated in Figures 1 to 4. In such an arrangement, the apparati may be utilized in a manner so as to occupy the least space. However, the apparati are also movable in a direction as indicated by arrow 18 in Figure 1 and are further movable laterally as indicated by arrow 20 in Figure 2. Thus, the apparati may be left in position during the period of time during which growth is occurring. When it is time to harvest the plants, the apparati may be moved to provide better access to the plants. Thus, the apparati can be moved to a staging area wherein the plants are either directly harvested or alternatively, according to an embodiment of the present invention, the trays are removed from the apparati for further processing. New trays may then be inserted as will be discussed hereinbelow.

It will be understood that many different arrangements may be utilized. In one embodiment, the interior tube surrounding the light source may be connected to adjacent tubes. Suitable ventilation means may be utilized with an intake at one end an outlet at the other end. They may be utilized for heating purposes or otherwise discarded.

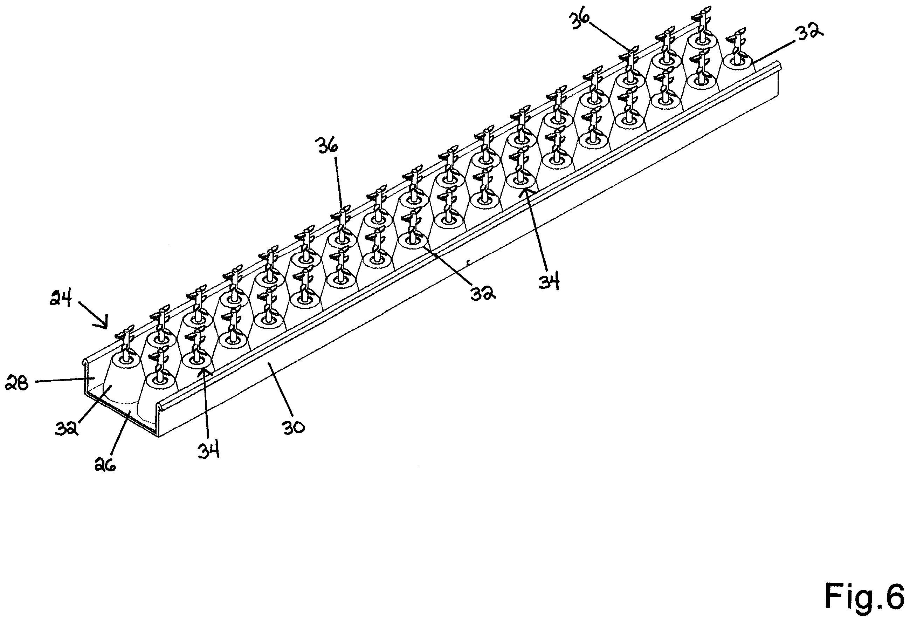

According to one embodiment of the present invention, there are provided trays similar to that shown in Figure 6 et seq. Each tray 24 has a wall 26 from which there are provided side walls 28 and 30. Formed in wall 26 are a plurality of frustoconical plant receiving receptacles 32. At the smaller end of frustoconical plant receiving receptacles 32 there is provided an opening 34 through which the plant may grow. Opening 34 is relatively small and is just sufficient for a plant 36 to grow. This arrangement prevents the loss of the "soil" or other medium in which the plant grows. At its wider end, frustoconical plant receptacle 32 has a rear opening 38 which may be covered by a suitable material as will be discussed hereinbelow.

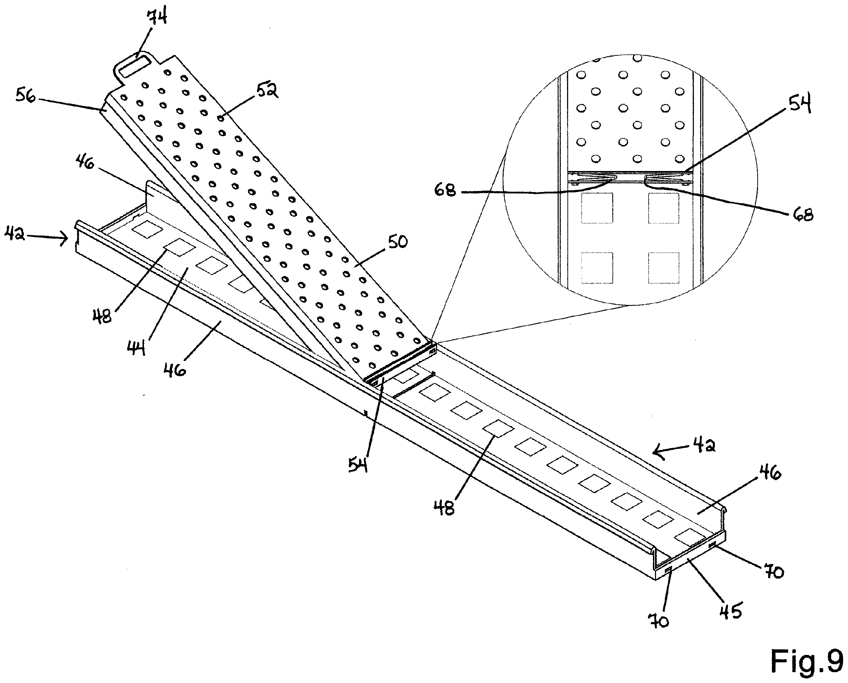

As shown in Figure 9 et seq, there may be provided an arrangement in which a base 42 has a bottom wall 44 and a pair of side walls 46. Openings 48 are provided in bottom wall 44. There are also provided trays 56 for receiving a plant growing medium or soil. Trays 56 may be formed to have a bottom of water permeable material or they are apertured. A cover 50 is provided and which has a plurality of relatively small apertures 52. Each tray 56 is designed to hook with a center member 54 such that the tray may be rotated upwardly for removal. Such arrangements permit the insertion and the removal of the receptacles 56 in a simple and straight forward fashion.

In greater detail, center member 54 is provided with a pair of U-shaped springs 68 which are designed to exert pressure away from center member 54. An end wall 45 of base 42 has a pair of slots 70 formed therein. An end wall of tray 56 has a pair of tabs 72 extending outwardly therefrom. In this arrangement, an end of tray 56 can be inserted next to center member 54 such that springs 68 exert a biasing force on tray 56. The user can exert a force on tray 56 such that tabs 72 will engage within slots 70. To facilitate the placement of tray 56, a handle 74 may be provided.

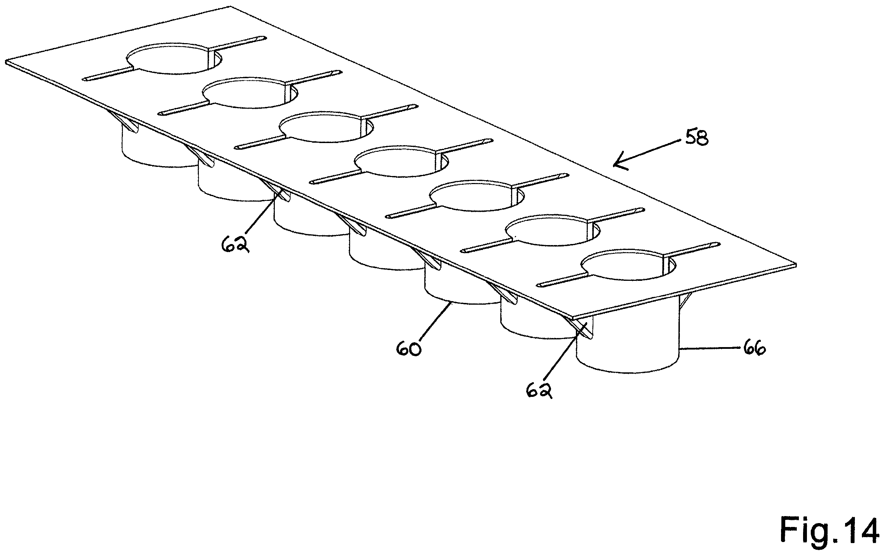

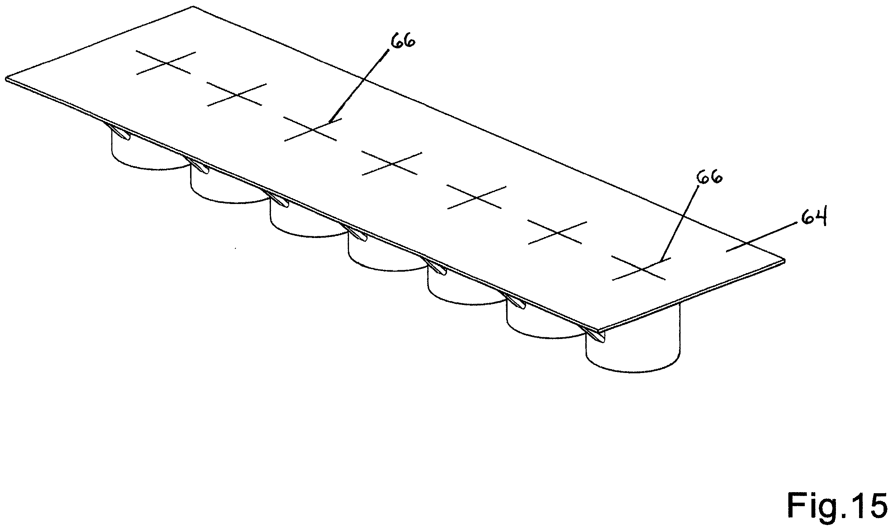

A further embodiment of tray 58 is illustrated in Figures 14 and 15. Tray 58 is provided with cylindrical plant receiving receptacles 60. Reinforcing ribs 62 may be utilized since the receptacles are larger.

On its other side, a covering 64 may be provided, covering 64 having slits 66 formed therein to permit the insertion of seedlings and/or seeds as appropriate.

It will be understood that the above described embodiment is for purposes of illustration only. The scope of the invention is defined by the appended claims.

## Claims

1. A growing apparatus comprising:
a rotatable drum (12);
a light source (15) situated interiorly of said rotatable drum;
a plurality of plant receiving devices (16) extending transversely of said drum and being located interiorly thereof;
said plant receiving devices (16) including a tray (56) having a plurality of plant receiving receptacles (32) formed therein, **characterised in that** each of said plant receiving receptacles (32) having a frustoconical configuration with a narrow end of said frustoconical configuration facing interiorly of said drum towards said light source, said plant receiving receptacles (32) contain a plant growing medium therein.

2. The apparatus of Claim 1 wherein said plant receiving receptacles include a sheet material (64) extending over a wider end of said plant receiving receptacles.

3. The apparatus of Claim 1 wherein said tray (56) is retained in said plant receiving devices hingedly at one end thereof such that said tray may be inserted and removed by lifting a remote end thereof.

4. The apparatus of Claim 1 wherein said plant receiving devices further include a cover (50) for said tray, said cover having a plurality of apertures (52) therein, and a base (42), said base being designed to receive said tray.

5. The apparatus of Claim 4 wherein said base includes an end wall (45).

6. The apparatus of Claim 5 wherein said plant receiving devices include a center member (54), said center member having a spring (68) mounted therein, said spring being arranged to engage said tray and exert a biasing force thereon.

7. The apparatus of Claim 6 wherein said base end wall includes a pair of slots (70) formed therein and said tray includes a pair of tab members (72) arranged to be insertable into said apertures of said base member.

8. An arrangement for growing plants, the arrangement including a plurality of apparati according to Claim 1, said apparati being stacked on top of one another and arranged in a plurality of rows.

## Patentansprüche

1. Züchtvorrichtung, umfassend:
eine drehbare Trommel (12);
eine Lichtquelle (15), die im Inneren der genannten drehbaren Trommel (12) angeordnet ist;
eine Vielzahl von Pflanzenaufnahmevorrichtungen (16), die sich in Querrichtung der genannten Trommel erstrecken und im Inneren davon angeordnet sind;
wobei die genannten Pflanzenaufnahmevorrichtungen (16) eine Schale (56) mit einer Vielzahl von darin ausgebildeten Pflanzenaufnahmebehältern (32) aufweisen,
**dadurch gekennzeichnet, dass**
jeder der genannten Pflanzenaufnahmebehälter (32) eine kegelstumpfförmige Ausgestaltung aufweist, wobei ein schmales Ende der genannten kegelstumpfförmigen Ausgestaltung im Inneren der genannten Trommel der genannten Lichtquelle zugewandt ist,
wobei die genannten Pflanzenaufnahmebehälter (32) ein Pflanzenwachstumsmedium darin enthalten.

2. Vorrichtung nach Anspruch 1, wobei die genannten Pflanzenaufnahmebehälter ein Schichtmaterial (64) aufweisen, das sich über ein breiteres Ende der genannten Pflanzenaufnahmebehälter erstreckt.

3. Vorrichtung nach Anspruch 1, wobei die genannte Schale (56) in den genannten Pflanzenaufnahmevorrichtungen an einem Ende gelenkig gehalten ist, so dass die genannte Schale durch Anheben eines entfernten Endes davon eingesetzt und entnommen werden kann.

4. Vorrichtung nach Anspruch 1, wobei die genannten Pflanzenaufnahmevorrichtungen ferner eine Abdeckung (50) für die genannte Schale, und eine Basis (42) aufweisen, wobei die genannte Abdeckung eine Vielzahl von Öffnungen (52) aufweist, wobei die genannte Basis dafür ausgebildet ist, um die genannte Schale aufzunehmen.

5. Vorrichtung nach Anspruch 4, wobei die genannte Basis eine Endwand (45) aufweist.

6. Vorrichtung nach Anspruch 5, wobei die genannten Pflanzenaufnahmevorrichtungen ein zentrales Element (54) aufweisen, wobei das genannte zentrale Element eine darin montierte Feder (68) aufweist, wobei die genannte Feder angeordnet ist, um mit der Schale in Eingriff zu gelangen und eine Vorspannkraft darauf auszuüben.

7. Vorrichtung nach Anspruch 6, wobei die genannte Basisendwand ein Paar von darin ausgebildeten Schlitzen (70) aufweist, wobei die genannte Schale ein Paar von Ansatzelementen (72) aufweist, die angeordnet sind, um in die genannten Öffnungen des genannten Basiselements eingesetzt werden zu können.

8. Anordnung zum Züchten von Pflanzen, wobei die Anordnung eine Vielzahl von Vorrichtungen nach Anspruch 1 aufweist, wobei die genannten Vorrichtungen übereinander gestapelt sind und in einer Vielzahl von Reihen angeordnet sind.

## Revendications

1. Appareil de culture comprenant
un tambour rotatif (12) ;
une source de lumière (15) située à l'intérieur dudit tambour rotatif (12) ;
une pluralité de dispositifs de réception de plantes (16) s'étendant transversalement par rapport audit tambour et se trouvant à l'intérieur de celui-ci ;
lesdits dispositifs de réception de plantes (16) comprenant un plateau (56) présentant une pluralité de réceptacles de réception de plantes (32) formés dans celui-ci, **caractérisé en ce que**
chacun desdits réceptacles de réception de plantes (32) présente une configuration frustoconique avec une extrémité étroite de ladite configuration frustoconique tournée vers ladite source de lumière à l'intérieur dudit tambour,
lesdits réceptacles de réception de plantes (32) contiennent un milieu de culture de plantes dans ceux-ci.

2. Appareil selon la revendication 1, dans lequel lesdits réceptacles de réception de plantes comprennent un matériau en feuille (64) s'étendant sur une extrémité plus large desdits réceptacles de réception de plantes.

3. Appareil selon la revendication 1, dans lequel ledit plateau (56) est retenu dans lesdits dispositifs de réception de plantes de façon pivotante à une extrémité de ceux-ci, de telle façon que ledit plateau peut être inséré et retiré en relevant une extrémité distale de celui-ci.

4. Appareil selon la revendication 1, dans lequel lesdits dispositifs de réception de plantes comprennent en outre un couvercle (50) pour ledit plateau, ledit couvercle présentant une pluralité d'ouvertures (52) dans celui-ci, et une base (42), ladite base étant conçue pour recevoir ledit plateau.

5. Appareil selon la revendication 4, dans lequel ladite base comprend une paroi terminale (45).

6. Appareil selon la revendication 5, dans lequel lesdits dispositifs de réception de plantes comprennent un élément central (54), ledit élément central présentant un ressort (68) monté dans celui-ci, ledit ressort étant réalisé de manière à engager ledit plateau et à exercer une force de poussée sur celui-ci.

7. Appareil selon la revendication 6, dans lequel ladite paroi terminale de base comprend une paire de fentes (70) formées dans celle-ci et ledit plateau comprend une paire d'éléments de patte (72) réalisés de manière à pouvoir être insérés dans lesdites ouvertures dudit élément de base.

8. Système destiné à la culture de plantes, le système comprenant une pluralité d'appareils selon la revendication 1, lesdits appareils étant empilés les uns sur les autres et disposés dans une pluralité de rangées.
